# EUROPÄISCHE PATENTSCHRIFT

(11) **EP 1 254 326 B1**
(45) Veröffentlichungstag und Bekanntmachung des Hinweises auf die Patenterteilung: **10.12.2003**
(21) Anmeldenummer: 01903499.0
(22) Anmeldetag: 08.02.2001
(51) Int. Cl.: F16H 48/30

(54) **DIFFERENTIALGETRIEBE MIT SPERRKUPPLUNG UND MIT EINER SOLCHEN AUSGESTATTETES VERTEILERGETRIEBE FÜR KRAFTFAHRZEUGE**
DIFFERENTIAL GEARBOX WITH LOCKING COUPLING AND DISTRIBUTOR GEARBOX FOR MOTOR VEHICLES EQUIPPED THEREWITH
ENGRENAGE DIFFERENTIEL A ACCOUPLEMENT DE BLOCAGE, ET BOITE DE TRANSFERT EQUIPEE D'UN TEL ENGRENAGE, DESTINEE A DES VEHICULES AUTOMOBILES

(30) Priorität: 10.02.2000 AT 942000 U
(43) Veröffentlichungstag der Anmeldung: 06.11.2002
(73) Patentinhaber: MAGNA STEYR Powertrain AG & CO KG, 8041 Graz (AT)
(72) Erfinder: LIPPITSCH, Klaus, A-8020 Graz (AT)
(74) Vertreter: Kovac, Werner, Dipl.-Ing.
(86) Internationale Anmeldenummer: AT0100031
(87) Internationale Veröffentlichungsnummer: WO01059331

(56) Entgegenhaltungen:
- EP-A- 0 340 451
- EP-A- 0 414 086

## Beschreibung

Die Erfindung betrifft ein Differentialgetriebe bestehend aus einem von einer Eingangswelle abgetriebenen Differentialgehäuse mit darin gelagerten Ausgleichsrädern, und je einem Abtriebsrad zum Antrieb einer ersten und einer zweiten Ausgangswelle, wobei das Differentialgehäuse über eine Reibungskupplung durch Druckbeaufschlagung einer Andruckplatte mit einer der Ausgangswellen verbindbar ist, wobei zur achsialen Verschiebung der Andruckplatte zwei drehentkoppelte Ringe mit Kugeln dazwischen vorgesehen sind, von denen mindestens einer in Umfangsrichtung ansteigende Rampen besitzt.

Mittels der Reibungskupplung ist das Differentialgetriebe sperrbar. Diese Sperrung kann sowohl "ja/nein" als auch kontinuierlich verstellbar sein. Zur Sperrung wird die Kupplung beaufschlagt, was erhebliche Betätigungskräfte erfordert. Diese Kräfte werden üblicherweise hydraulisch aufgebracht. Die hydraulische Betätigung ist jedoch zu langsam, um die Kupplung in der für die elektronische Schlupfbegrenzung (ESB) nötigen kurzen Schaltzeit zu lösen. Ausserdem besitzen Personenkraftwagen kein Hydrauliksystem. Die nicht-hydraulische Betätigung, mittels elektrischer Mittel und mechanischer Übertragung scheiterte bislang an den hohen Betätigungskräften, die über Lager ins Gehäuse eingeleitet werden mussten.

Nebstbei stellt sich bei elektrischer Betätigung immer die Frage nach der Betriebssicherheit bei Ausfall der elektrischen Mittel. Bei Verwendung eines sperrbaren Differentials in einem Verteilergetriebe eines allradgetriebenen Fahrzeuges mit Geländegangstufe besteht das zusätzliche Problem, auch diese noch koordiniert mit der Differentialsperre anzusteuern.

Aus der EP 414 086 A2 ist ein mittels einer Reibungskupplung sperrbares Differentialgetriebe bekannt, bei dem die Kupplung mittels zwei drehentkoppelter Ringe erfolgt, von denen einer gehäusefest ist und der andere von einem Aktuator verdreht wird. Dadurch aber werden Schaltkräfte in der Kupplung wirksam und die Schaltzeit vergrößert sich.

Es ist daher Ziel der Erfindung, ein sperrbares Differential zu schaffen, das die oben angeführten Nachteile vermeidet; es sollen keine Betätigungskräfte ins Gehäuse einzuleiten sein, die für RSB erforderlichen kurzen Schaltzeiten sollen erreichbar sein, all das bei möglichst geringem Bauaufwand und eigensicher.

Erfindungsgemäß wird das dadurch erreicht, dass beide Ringe je einen Rampenhebel besitzen, dessen freies Ende mit einer Steuereinheit zusammenwirkt, welche elektrische Antriebsmittel besitzt und die die Rampenhebel gegensinnig bewegt.

Die voneinander und von der sie tragenden Welle drehentkoppelten Ringe sind mittels ihrer Rampenhebel gegeneinander verdrehbar, wobei wegen deren gegensinniger Bewegung keine Betätigungskräfte zum Gehäuse abzuleiten sind. Die ansteigenden Rampen in dem/den Ring(en) erfordern für hohe Betätigungskräfte nur eine sehr kleine relative Verdrehung, sodass im Zusammenwirken mit der elektrischen Betätigung sehr kurze Schaltzeiten erreicht werden.

In bevorzugten Ausführungsformen weist die Steuereinheit eine mittels eines elektrischen Getriebemotors verdrehbare Steuerscheibe auf (Anspruch 2) und ist die Drehachse der Steuerscheibe in der Bewegungsrichtung der freien Enden der beiden Rampenhebel ausgerichtet (Anspruch 3).

Die Erfindung betrifft auch ein Verteilergetriebe für Kraftfahrzeuge mit einem Differentialgetriebe nach einem der vorgehenden Ansprüche und mit einer Geländegangstufe, die durch axiales Verschieben eines ihrer Elemente schaltbar ist. Um auch die Geländegangstufe möglichst koordiniert und mit geringstem Aufwand eigensicher zu steuern, ist erfindungsgemäß vorgesehen, dass
a) die Steuereinheit aus einer vom Getriebemotor angetriebenen Trägerwelle, einer mit dieser drehfest verbundenen aber verschiebbaren Umschaltmuffe, der auf der Trägerwelle drehbar gelagerten Steuerscheibe und einem auf dieser ebenfalls drehbar gelagerten Steuerritzel für die Umschaltung der Geländegangstufe besteht,
b) wobei die Umschaltmuffe mittels eines Elektromagneten verschiebbar ist und erste und zweite Kuppelzähne besitzt, mittels derer sie wahlweise die Antriebsverbindung zur Steuerscheibe oder zum Steuerritzel herstellt.

Mit dieser Ausgestaltung kann mit einer einzigen Steuereinheit und einem einzigen Motor wahlweise sowohl die Differentialsperre als auch die Geländegangstufe eigensicher angesteuert werden. Ausserdem spart es Kosten und Bauraum, der in einem Verteilergetriebe knapp ist. Weiters ist sichergestellt, dass nicht beide gleichzeitig geschaltet werden, und dass bei Ausfall der Steuereinheit die Sperre gelöst ist.

In einer vorteilhaften Weiterbildung ist der Elektromagnet ein Dreistellungsmagnet, der die Umschaltmuffe mittels einer Schaltgabel verschiebt (Anspruch 5) und besitzt die Umschaltmuffe Schaltzähne mit abdrängendem Eingriffswinkel (Anspruch 6). Dadurch wird bei Ausfall des Elektromagneten die Kupplung selbsttätig geöffnet, im Sinne einer eigensicheren Betätigung.

Weiters sind im Differentialgehäuse nebst den Ausgleichsrädern Planetenräder der Geländegangstufe gelagert, welche einerseits mit einem Antriebssonnenrad und andererseits mit einem Hohlrad kämmen, wobei das Hohlrad in Axialrichtung verschiebbar ist (Anspruch 7).

In einer vorteilhaften Weiterbildung ist mit der Nabe der Steuerscheibe und mit dem Steuerritzel je eine Arretierscheibe mit zumindest einer Arretierausnehmung fest verbunden, welche mit einem mit der Umschaltmuffe gekoppelten Arretierglied zusammenwirkt, welches Arretierglied auf jeder Seite einen Arretierzahn besitzt, sodass der Arretierzahn in die Arretierausnehmung der Arretierscheibe eingreift, wenn die Steuerscheibe ausgekuppelt ist, und sodass der Arretierzahn in die Arretierausnehmung der Arretierscheibe eingreift, wenn das Steuerritzel ausgekuppelt ist (Anspruch 8). Auf diese Weise wird ohne äussere Einwirkung die inhärente Sicherheit hergestellt, dass das jeweils entkuppelte Abtriebselement arretiert ist, und dass erst nach Beendigung eines Schalteingriffes ausgekuppelt werden kann.

Im folgenden wird die Erfindung anhand von Abbildungen beschrieben und erläutert. Es stellen dar:
- Fig. 1:: Einen Vertikalschnitt durch ein Ausführungsbeispiel eines erfindungsgemäßen Verteilergetriebes mit dem erfindungsgemäßen Differential,
- Fig. 2:: einen Schnitt nach CC in Fig. 1,
- Fig. 3:: einen Schnitt nach AA in Fig. 1,
- Fig. 4:: alternatives Detail zu Fig. 3, etwas vergrößert.

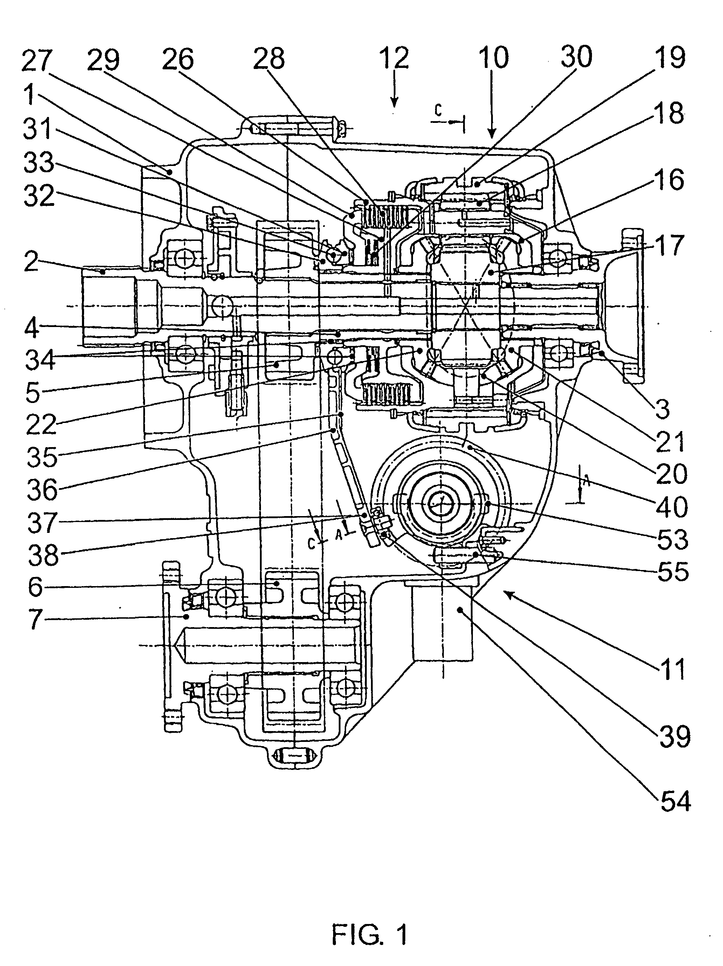

In Fig. 1 ist das Gehäuse eines Verteilergetriebes insgesamt mit 1 bezeichnet, eine von der nicht dargestellten Antriebseinheit des Fahrzeuges kommende Eingangswelle mit 2, eine mit der Hinterachse antriebsverbundene erste Ausgangswelle mit 3 und eine mit der ebenfalls nicht dargestellten Vorderachse antriebsverbundene zweite Ausgangswelle mit 4. Die zweite Ausgangswelle 4 treibt mittels eines ersten Zahnriemenrades 5 ein zweites Zahnriemenrad 6 unter der Eingangswelle 2, welches auf einer Abtriebswelle 7 für den Antrieb der Vorderachse sitzt.

Zur Verteilung des Drehmomentes auf die beiden Ausgangswellen 3,4 ist ein summarisch mit 10 bezeichnetes Differentialgetriebe vorgesehen. Weiters ist eine Steuereinheit 11 unter dem Differentialgetriebe 10 und eine Sperrkupplung 12 zum Sperren des Differentialgetriebes 10 vorgesehen. In dem gezeigten Ausführungsbeispiel ist die Sperrkupplung baulich mit dem Differentialgetriebe 10 vereint. Sie könnte aber auch getrennt, ja sogar irgendwo anders im Verteilergetriebe bzw. im Antriebszug angeordnet sein. Auch das Differentialgetriebe selbst kann im Rahmen der Erfindung sehr verschieden ausgebildet sein.

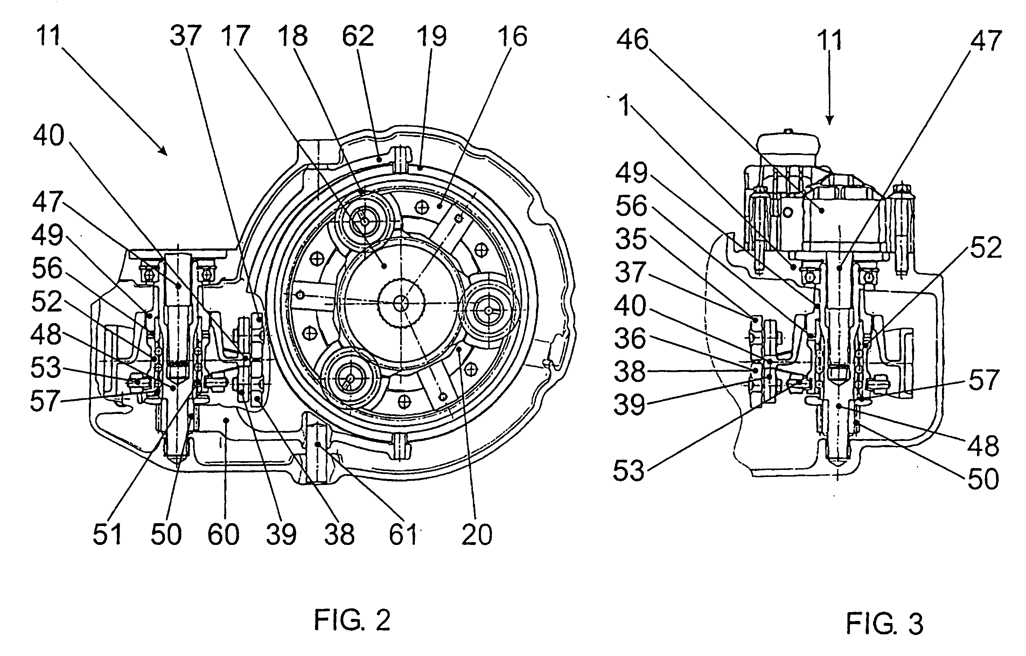

In den Fig. 1 und Fig. 2 ist eine beispielsweise und besondere Ausführung des Differentialgetriebes erkennbar. Im Inneren des Differentialgehäuses 16, das hier gleichzeitig als Planetenträger dient, befindet sich ein drehfest mit der Eingangswelle 2 verbundenes Sonnenrad 17, im Differentialgehäuse 16 drehbar gelagerte Planetenräder 18 der Geländegangstufe sowie erste Abtriebsräder 21 und zweite Abtriebsräder 22 und Ausgleichsräder 20. Erstere (21) sind mit der ersten Ausgangswelle 3 und zweitere (22) sind mit der zweiten Ausgangswelle 4 drehfest verbunden. Das Differentialgehäuse 16 ist von einem Hohlrad 19 umgeben, das achsial verschiebbar und im Geländegang mit dem Differentialgehäuse 16 drehfest verbunden ist. Diese besondere Ausführungsform des Differentialgetriebes 10 ist Gegenstand des österreichischen Patentes 405 157 und dort in Bauund Funktionsweise ausführlicher beschrieben.

In Fig. 1 ist auch die Sperrkupplung 12 im Detail dargestellt. Sie besteht aus einem Kupplungsgehäuse 26, das mit dem Differentialgehäuse 16 fest verbunden bzw. hier sogar einstückig ist, einem Kupplungsinnenteil 27 das drehfest mit der zweiten Ausgangswelle 4 verbunden ist, einem Lamellenpaket 28, und einer Andruckplatte 29, die von Rückholfedern 30 in Öffnungsrichtung beaufschlagt ist. Zwischen der Andruckplatte 29 und der zweiten Ausgangswelle, hier insbesondere dem auf dieser sitzenden ersten Zahnriemenrad 5 sind zwei Ringe 31,32 angeordnet. Zwischen diesen Ringen 31,32 befinden sich in entsprechenden Umfangsrillen Kugeln 33. Diese Umfangsrillen sind in einem der Ringe, oder in beiden, als Rampen ausgebildet, sodass bei Relativdrehung der beiden Ringe gegeneinander durch Auflaufen der Kugel auf der Rampe eine Achsialkraft erzeugt wird. Die beiden Ringe 31,32 stehen ganz still, wenn die Kupplung nicht betätigt wird. Zur Drehentkopplung sind daher beide Ringe 31,32 auf Nadellagern 34 gelagert. Der erste Ring 31 besitzt einen ersten Rampenhebel 35, der zweite Ring 32 einen zweiten (36), welche mit einem Ende fest mit dem Ring verbunden sind, nach unten ragen und an ihren freien Enden 37,38 Rollen 39 besitzen. Zwischen den beiden Rollen 39 befindet sich eine drehbare Steuerscheibe 40. Bei Verdrehen dieser Steuerscheibe werden die Rollen 39 auseinanderbewegt und über die scherennartig bewegten Rampenhebel 35,36 die Ringe 31,32 gegeneinander verdreht.

In Fig. 2 und Fig. 3 ist ein elektrischer Getriebemotor mit 46 bezeichnet, dessen Motorausgangswelle 47 sich bei laufendem Motor entsprechend untersetzt dreht. Mit dieser ist drehfest eine hülsenartig auf diese aufgesteckte Trägerwelle 48 verbunden, die beiderseits im Gehäuse 1 gelagert ist. Auf der Trägerwelle 48 ist die Nabe 49 der Steuerscheibe 40 und ein Ritzel 50 drehbar gelagert. Zwischen der Nabe 49 und dem Ritzel 50 ist auf der Trägerwelle 48 mittels einer Kugellängsführung 51 eine Umschaltmuffe 52 drehfest aber in Längsrichtung verschiebbar angebracht. Die Umschaltmuffe 52 wird mittels einer Umschaltgabel 53 verschoben, welche von einem Umschaltmagneten 54 (Fig. 1) über einen in einer Umschaltgabelachse 55 (Fig. 1) gelagerten Hebel betätigt wird. Die Umschaltmuffe 52 hat an ihren beiden Achsialenden erste Schaltzähne 56 zur drehfesten Verbindung mit der Nabe 49 und zweite Schaltzähne 57 zur drehfesten Verbindung mit dem Ritzel 50. Die Schaltzähne 56,57 sind Kuppelzähne mit abdrängendem Eingriffswinkel.

Das Ritzel 50 kämmt mit einem Zahnsegment 60, das Teil einer um eine Schwingachse 61 im Gehäuse schwenkbaren Schaltgabel 62 ist, mittels derer das Hohlrad 19 zur Umschaltung in den Geländegang verschoben wird.

Durch diese verschiebbare Umschaltmuffe kann derselbe Getriebemotor 46 wahlweise entweder der Sperrung des Differentiales oder der Umschaltung in den Geländegang dienen, nie beides gleichzeitig. Bei Ausfallen des Umschaltmagneten 54 wird die Umschaltmuffe 52, wenn sie gerade mit der Nabe 49 oder dem Ritzel 50 in Eingriff steht, durch den abdrängenden Eingriffswinkel der Schaltzähne 56,57 und derer Gegenzähne in die entkuppelte Stellung abgedrängt. Auf diese Weise wird bei Ausfall des Magneten die Differentialsperre sicher gelöst. Soll ausgehend von der neutralen Stellung der Umschaltmuffe 52 entweder des Differential gesperrt oder in den Geländegang geschaltet werden, so wird diese durch Beaufschlagung des als Dreistellungsmagneten ausgebildeten Schaltmagneten 54 entweder mit der Nabe 49 oder mit dem Ritzel 50 drehfest verbunden. Sodann wird durch Einschalten des Motors die entsprechende Verstellung vorgenommen.

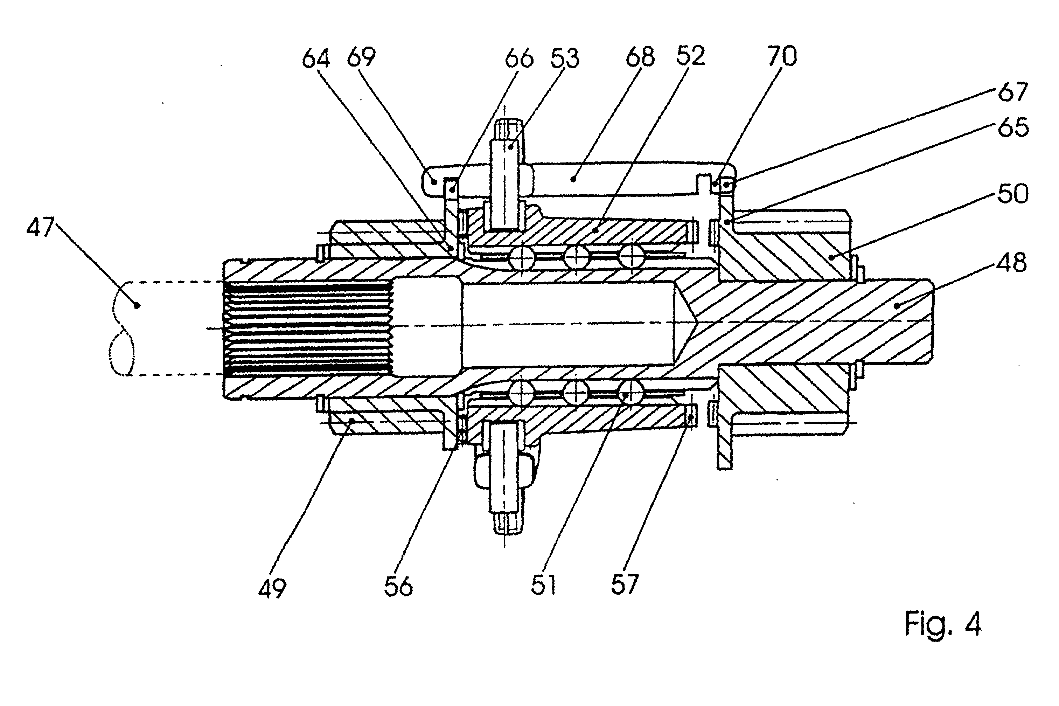

Fig. 4 zeigt eine abgewandelte Ausführungsform der Steuereinheit 11. Auf der Trägerwelle 48 ist einerseits die Nabe 49 der Steuerscheibe 40 und andererseits das Steuerritzel 50 drehbar gelagert. Die Nabe 49 ist mit einer ersten Arretierscheibe 64 und das Steuerritzel 50 mit einer zweiten Arretierscheibe 65 fest verbunden beziehungsweise einstückig. Die Arretierscheiben 64,65 haben an ihrem Aussenumfang mindestens eine Arretierausnehmung 66, 67, welche mit einem mit der Umschaltmuffe 52 gekoppelten Arretierglied 68 zusammenwirken. Dieses kann mit der Umschaltgabel 53 einstückig oder so verbunden sein, dass es deren Bewegung in Längsrichtung folgt.

Das Arretierglied 68 besitzt auf der Seite der Nabe 49 einen die Arretierscheibe 64 übergreifenden ersten Arretierzahn 69 und auf der Seite des Steuerritzels 50 einen die Arretierscheibe 65 übergreifenden zweiten Arretierzahn 70. Der erste Arretierzahn 69 greift nicht in die erste Arretierausnehmung 66 ein, wenn die Nabe 49 mit der Umschaltmuffe 52 gekuppelt ist, die Arretierscheibe 64 kann sich ungehindert drehen. In dieser Stellung des Arretiergliedes 68 ist das Steuerritzel 50 entkuppelt und der zweite Arretierzahn 70 greift in die zweite Arretierausnehmung 67 ein, sodass das Steuerritzel 50 arretiert ist.

Soll nun, nachdem die Steuerscheibe 40 ihre Stellbewegung beendet hat, zu einer Verstellung mittels des Steuerritzels 50 übergegangen werden, so wird die Umschaltgabel 53 im Bild nach rechts verschoben. Wenn die Steuerscheibe 40 ihre Stellbewegung ordnungsgemäß beendet hat, kann der Arretierzahn 69 in die Arretierausnehmung 66 eingreifen und arretiert so die Steuerscheibe 40. Gleichzeitig wird auf der anderen Seite der Arretierzahn 70 nach rechts aus der Arretierausnehmung 67 herausgeschoben und die Umschaltmuffe 52 greift mit ihrer Kuppelverzahnung 57 in die zugehörige Kuppelverzahnung des Steuerritzels 50 ein. So wird dieses entriegelt und gekuppelt.

## Patentansprüche

1. Differentialgetriebe bestehend aus einem von einer Eingangswelle abgetriebenen Differentialgehäuse (16) mit darin gelagerten Ausgleichsrädern (20), und je einem Abtriebsrad (21,22) zum Antrieb einer ersten und einer zweiten Ausgangswelle (3,4), wobei das Differentialgehäuse über eine Reibungskupplung (12) durch Druckbeaufschlagung einer Andruckplatte (29) mit einer der Ausgangswellen (3;4) verbindbar ist, wobei zur axialen Verschiebung der Andruckplatte (29) zwei drehentkoppelte Ringe (31,32) mit Kugeln (33) dazwischen vorgesehen sind, von denen mindestens einer in Umfangsrichtung ansteigende Rampen besitzt, dadurch **ge-kennzeichnet**, dass beide Ringe (31,32) je einen Rampenhebel (35,36) besitzen, dessen freies Ende (37,38) mit einer Steuereinheit (11) zusammenwirkt, welche elektrische Antriebsmittel (46; 54) besitzt und die die Rampenhebel gegensinnig bewegt.

2. Differentialgetriebe nach Anspruch 1, **dadurch gekennzeichnet, dass** die Steuereinheit (11) eine mittels eines elektrischen Getriebemotors (46) verdrehbare Steuerscheibe (40) aufweist.

3. Differentialgetriebe nach Anspruch 2, **dadurch gekennzeichnet, dass** die Drehachse der Steuerscheibe (40) in der Bewegungsrichtung der freien Enden (37,38) der beiden Rampenhebel (35,36) ausgerichtet ist.

4. Verteilergetriebe für Kraftfahrzeuge mit einem Differentialgetriebe nach einem der vorgehenden Ansprüche und mit einer Geländegangstufe, die durch axiales Verschieben eines ihrer Elemente (19) schaltbar ist, **dadurch gekennzeichnet, dass**
a) die Steuereinheit (11) aus einer vom Getriebemotor (46) angetriebenen Trägerwelle (48), einer mit dieser drehfest verbundenen aber verschiebbaren Umschaltmuffe (52), der auf der Trägerwelle (48) drehbar gelagerten Steuerscheibe (40) und einem auf dieser ebenfalls drehbar gelagerten Steuerritzel (50) für die Umschaltung der Geländegangstufe besteht,
b) wobei die Umschaltmuffe mittels eines Elektromagneten (54) verschiebbar ist und erste und zweite Kuppelzähne (56, 57) besitzt, mittels derer sie wahlweise die Antriebsverbindung zur Steuerscheibe oder zum Steuerritzel herstellt.

5. Verteilergetriebe nach Anspruch 4, **dadurch gekennzeichnet, dass** der Elektromagnet (54) ein Dreistellungsmagnet ist, der die Umschaltmuffe (52) mittels einer Schaltgabel (53) verschiebt.

6. Verteilergetriebe nach Anspruch 4, **dadurch gekennzeichnet, dass** die Umschaltmuffe (52) Kuppelzähne (56,57) mit abdrängendem Eingriffswinkel besitzt.

7. Verteilergetriebe nach Anspruch 4, **dadurch gekennzeichnet, dass** im Differentialgehäuse (16) nebst den Ausgleichsrädern (20) Planetenräder (18) der Geländegangstufe gelagert sind, welche einerseits mit einem Antriebssonnenrad ( 17) und andererseits mit einem Hohlrad ( 19) kämmen, wobei das Hohlrad in Axialrichtung verschiebbar ist.

8. Verteilergetriebe nach Anspruch 4, **dadurch gekennzeichnet, dass** mit der Nabe (49) der Steuerscheibe (40) und mit dem Steuerritzel (50) je eine Arretierscheibe (64,65) mit mindest einer Arretierausnehmung (66, 67) fest verbunden ist, welche mit einem mit der Umschaltmuffe (52) gekoppelten Arretierglied (68) zusammenwirkt, welches Arretierglied (68) auf jeder Seite einen Arretierzahn (69, 70) besitzt, sodass der Arretierzahn (69) in die Arretierausnehmung (66) der Arretierscheibe (64) eingreift, wenn die Steuerscheibe (40) ausgekuppelt ist, und sodass der Arretierzahn (70) in die Arretierausnehmung (67) der Arretierscheibe (65) eingreift, wenn das Steuerritzel (50) ausgekuppelt ist.

## Claims

1. A differential transmission comprising a differential casing (16) driven by an input shaft and having compensating gears (20) mounted therein, and in each case having an output gear (21, 22) to drive a first and a second output shaft (3, 4), the differential casing being connectable to one of the output shafts (3, 4) via a friction clutch (12) by pressure being applied to a pressure plate (29), wherein for the axial displacement of the pressure plate (29), two rings (31, 32) decoupled in terms of rotation with balls (33) between them are provided, of which at least one has ramps that rise in the circumferential direction, **characterized in that** both rings (31, 32) each have a ramp lever (35, 36) whose free end (37, 38) interacts with a control unit (11), which has electric drive means (46, 54) and moves the ramp levers in opposite directions.

2. The differential transmission as claimed in claim 1, **characterized in that** the control unit (11) has a control disk (40) that can be rotated by means of a geared electric motor (46).

3. The differential transmission as claimed in claim 2, **characterized in that** the axis of rotation of the control disk (40) is aligned in the direction of movement of the free ends (37, 38) of the two ramp levers (35, 36).

4. A transfer gearbox for motor vehicles, having a differential transmission as claimed in one of the preceding claims and having a high-low-group which can be shifted by means of axial displacement of one of its elements (19), **characterized in that**
a) the control unit (11) comprises a carrier shaft (48) driven by the geared motor (46), a changeover sleeve (52) shiftably connected to said carrier shaft (48) so for rotation with it, the control disk (40) rotatably mounted on the carrier shaft (48) and a control pinion (50), likewise rotatably mounted on said carrier shaft (48), for changing over the high-low-group,
b) the changeover sleeve being displaceable by means of an electromagnet (54) and having first and second sets of coupling teeth (56,57), by means of which it establishes the drive connection to the control disk (40) or to the control pinion (50) as chosen.

5. The transfer gearbox as claimed in claim 4, **characterized in that** the electromagnet (54) is a three-position magnet, which displaces the changeover sleeve (52) by means of a selector fork (53).

6. The transfer gearbox as claimed in claim 4, **characterized in that** the changeover sleeve (52) has coupling teeth (56, 57) with a repulsing engagement angle.

7. The transfer gearbox as claimed in claim 4, **characterized in that** in the differential casing (16), planet gears (18) of the high-low-group are mounted in addition to the compensating gears (20), which planet gears (18) mesh on the one hand with a drive sun gear (17) and on the other hand with an internal gear (19), the internal gear being axially displaceable.

8. The transfer gearbox as claimed in claim 4, **characterized in that** to each of the hub (49) of the control disk (40) and of the control pinion (50), a locking disk (64, 65) with at least one locking recess (66, 67) is firmly connected and interacts with a locking element (68) that is coupled to the changeover sleeve (52), which locking element (68) has a locking tooth (67, 70) on each side, so that the locking tooth (69) engages in the locking recess (66) in the locking disk (64) when the control disk (40) is disengaged, and so that the locking tooth (70) engages the locking recess (67) in the locking disk (65) when the control pinion (50) is disengaged.

## Revendications

1. Engrenage différentiel constitué d'un carter de différentiel (16), qui est entraîné par un arbre d'entrée et dans lequel sont montés des roues de compensation (20), et pour chacune d'une roue de sortie (21, 22), destinée à entraîner des premier et deuxième arbres de sortie (3, 4), dans lequel
le carter différentiel peut être relié à l'un des arbres de sortie (3 ; 4) via un embrayage à friction (12) par pression exercée par une plaque de pressage (29),
il est prévu, en vue de déplacer axialement la plaque de pressage (29), deux bagues (31, 32) découplées en rotation entre lesquelles sont agencées des billes (33) et dont au moins une possède des rampes périphériques montantes,
**caractérisé en ce que** les deux bagues (31, 32) possèdent chacune un levier de rampe (35, 36) dont l'extrémité libre (37, 38) coopère avec une unité de commande (11) qui possède des moyens d'entraînement (46 ; 54) et qui déplace les leviers de rampe en sens contraire.

2. Engrenage différentiel selon la revendication 1, **caractérisé en ce que** l'unité de commande (11) comporte un disque de commande (40) pouvant être entraîné par un motor-réducteur électrique (46).

3. Engrenage différentiel selon la revendication 2, **caractérisé en ce que** l'axe de rotation du disque de commande (40) est orienté dans la direction du mouvement des extrémités libres (37, 38) des deux leviers de rampe (35, 36) .

4. Boîte de transfert comportant un engrenage différentiel selon l'une des revendications précédentes et un étage de vitesses tout-terrain qui est commutable en déplaçant axialement l'un de ses éléments (19), **caractérisée en ce que**
a) l'unité de commande (11) est constituée d'un arbre porteur (48) entraîné par le moto-réducteur (46), d'un manchon de changement de vitesses (52) calé en rotation mais déplaçable sur l'arbre porteur (48), du disque de commande (40) monté tournant sur l'arbre porteur (48) et d'un pignon de commande (50) également monté à rotation sur ledit arbre porteur et destiné à changer les vitesses au niveau de l'étage de vitesses tout-terrain,
b) le manchon de changement de vitesses est déplaçable au moyen d'un électroaimant (54) et possédant des première et deuxième dents de couplage (56, 57) au moyen desquelles ledit manchon réalise sélectivement la liaison d'entraînement au disque de commande ou au pignon de commande.

5. Boîte de transfert selon la revendication 4, **caractérisée en ce que** l'électroaimant (54) est un aimant à trois positions qui déplace le manchon de changements de vitesses (52) au moyen d'une fourchette d'embrayage (53).

6. Boîte de transfert selon la revendication 4, **caractérisée en ce que** le manchon de changement de vitesses (52) possède des dents de couplage (56, 57) présentant un angle d'engrènement à repoussement.

7. Boîte de transfert selon la revendication 4, **caractérisée en ce que** des roues planétaires (18) de l'étage de vitesses tout-terrain sont montées dans le carter de différentiel (16) en plus des roues de compensation (20), lesquelles roues planétaires s'engrènent d'une part avec une roue solaire d'entraînement (17) et d'autre part une couronne de train planétaire (19), la couronne de train planétaire étant déplaçable dans une direction axiale.

8. Boîte de transfert selon la revendication 4, **caractérisée en ce que** le moyeu (49) du disque de commande (40) et le pignon de commande (50) sont reliés chacun à un disque de blocage (64, 65) comportant au moins un évidement de blocage (66, 67) qui coopère avec un élément de blocage (68) qui est couplé au manchon de changement de vitesses (52) et qui possède de chaque côté une dent de blocage (69,70) de sorte que la dent de blocage (69) s'engage dans l'évidement de blocage (66) du disque de blocage (64) lorsque le disque de commande (40) est découplé et de sorte que la dent de blocage (70) s'engage dans l'évidement de blocage (67) du disque de blocage (65) lorsque le pignon de commande (50) est découplé.
